# EUROPEAN PATENT SPECIFICATION

(11) **EP 3 995 752 B1**
(45) Date of publication and mention of the grant of the patent: **27.09.2023**
(21) Application number: 19936001.7
(22) Date of filing: 04.07.2019
(51) Int. Cl.: F24H 4/02, F24D 11/02, F24D 17/02, F24D 3/08, F24D 3/18, F24H 15/136

(54) **HOT WATER SUPPLY SYSTEM**
HEISSWASSERVERSORGUNGSSYSTEM
SYSTÈME D'ALIMENTATION EN EAU CHAUDE

(43) Date of publication of application: 11.05.2022
(73) Proprietor: MITSUBISHI ELECTRIC CORPORATION, Chiyoda-ku Tokyo 100-8310 (JP)
(72) Inventor: TAKAYAMA, Keisuke, Tokyo 1008310 (JP)
(74) Representative: Pfenning, Meinig & Partner mbB
(86) International application number: PCT/JP2019/026670
(87) International publication number: WO 2021/002003

(56) References cited:
- EP-A1- 2 789 933
- GB-A- 2 540 518
- JP-A- 2002 228 258
- JP-A- 2008 082 653
- JP-A- 2012 032 053
- JP-A- 2016 075 425
- JP-B2- 3 737 357
- US-A1- 2008 092 568
- US-A1- 2013 219 945

## Description

### Field

The present invention relates to a hot-water supply system.

### Background

With regard to a heat pump hot-water supply system, there is known a technique of performing a defrosting operation for melting frost sticking to an air heat exchanger. A hot-water supply system disclosed in PTL 1 includes a heat pump water heater, a heat exchanger, a hot-water storage tank for storing hot water supplied from an outlet of a secondary-side flow path of the heat exchanger, temperature sensors for detecting each of a water temperature at a primary-side inlet of the heat exchanger and a water temperature at a secondary-side outlet of the heat exchanger, a circulation pump for supplying cold water from a water outlet in a lower portion of the hot-water storage tank to the secondary-side flow path, and a control unit. The control unit controls a circulation flow rate supplied to the secondary-side flow path to maintain a constant set temperature without causing the temperature at the secondary-side flow path outlet to follow the temperature at the primary-side flow path inlet, in order to reduce a decrease in the temperature at the secondary-side flow path outlet in a predetermined time period after the defrosting operation of the heat pump water heater is completed.

Document US 2013/219945 A1 discloses a hot-water supply system according to the preamble of claim 1.

### Citation List

### Patent Literature

[PTL 1] JP 2016-075425 A

### Summary

### Technical Problem

In the conventional hot-water supply system as described above, after the defrosting operation is completed, the water temperature on a primary side of the heat exchanger degreases. Therefore, even when the circulation flow rate of the secondary-side flow path is reduced, it is difficult to sufficiently increase the temperature at the secondary-side flow path outlet. Consequently, low-temperature water flows into an upper portion of the hot-water storage tank, which makes it difficult to sufficiently reduce the decrease in the temperature of the hot water in the hot-water storage tank.

The present invention has been made to solve the above-described problems, and it is an object to provide a hot-water supply system which is advantageous to reduce a decrease in hot-water temperature in a hot-water storage tank in returning from a defrosting operation to a heat accumulating operation.

### Solution to Problem

A hot-water system according to the present invention includes: a compressor for compressing refrigerant; an air heat exchanger for exchanging heat between the refrigerant and air; a first heat exchanger for exchanging heat between the refrigerant and a heat medium; a refrigerant circuit switching valve for switching between a first refrigerant circuit through which the refrigerant compressed by the compressor flows into the first heat exchanger and a second refrigerant circuit through which the refrigerant compressed by the compressor flows into the air heat exchanger; a second heat exchanger for exchanging heat between the heat medium and water; a heat-medium circuit connecting the first heat exchanger to the second heat exchanger; a heat-medium pump for circulating the heat medium in the heat-medium circuit; a hot-water storage tank including a lower portion provided with a water outlet, and an upper portion provided with a hot-water inlet at a level higher than a level of the water outlet; a water-feed path connecting the water outlet to the second heat exchanger; a water-return path connecting the second heat exchanger to the hot-water inlet; a water pump for circulating the water in a water circuit formed by the water-feed path, the second heat exchanger, and the water-return path; and control circuitry configured to control a heat accumulating operation for causing hot water flowing out of the second heat exchanger to flow into the hot-water storage tank and a defrosting operation for melting frost sticking to the air heat exchanger The control circuitry is configured to: in the heat accumulating operation, work the compressor, the heat-medium pump, and the water pump, and circulate the refrigerant through the first refrigerant circuit; in the defrosting operation, work the compressor and the heat-medium pump while the water pump is stopped and circulate the refrigerant through the second refrigerant circuit; perform a recovery operation before restarting the heat accumulating operation after the defrosting operation; and in the recovery operation, work the compressor and the heat-medium pump while the water pump is stopped and circulate the refrigerant through the first refrigerant circuit. Advantageous Effects of Invention

The present invention makes it possible to provide a hot-water supply system which is advantageous to reduce a decrease in hot-water temperature in a hot-water storage tank in returning from a defrosting operation to a heat accumulating operation.

### Brief Description of Drawings

Fig. 1 is a diagram illustrating a hot-water supply system according to embodiment 1 of the present invention.
Fig. 2 is a functional block diagram of the hot-water supply system according to embodiment 1.
Fig. 3 is a flowchart illustrating an example of processes when a defrosting operation is performed on a hot-water supply system according to the invention.
Fig. 4 is a graph illustrating an example of a change over time in each of a temperature detected by a heat pump outlet temperature sensor, a temperature detected by a tank inflow temperature sensor, a rotational speed of a compressor, a rotational speed of a heat-medium pump, and a rotational speed of a water pump, when a heat accumulating operation is interrupted and the defrosting operation and a recovery operation are performed, and then the heat accumulating operation is restarted on a hot-water supply system according to the invention.

### Description of an embodiment according to the invention

Hereinafter, an embodiment according to the invention will be described with reference to the drawings. Common or corresponding elements in the respective drawings are assigned with same reference signs, and redundant explanation is simplified or omitted.

### Embodiment 1 of the invention

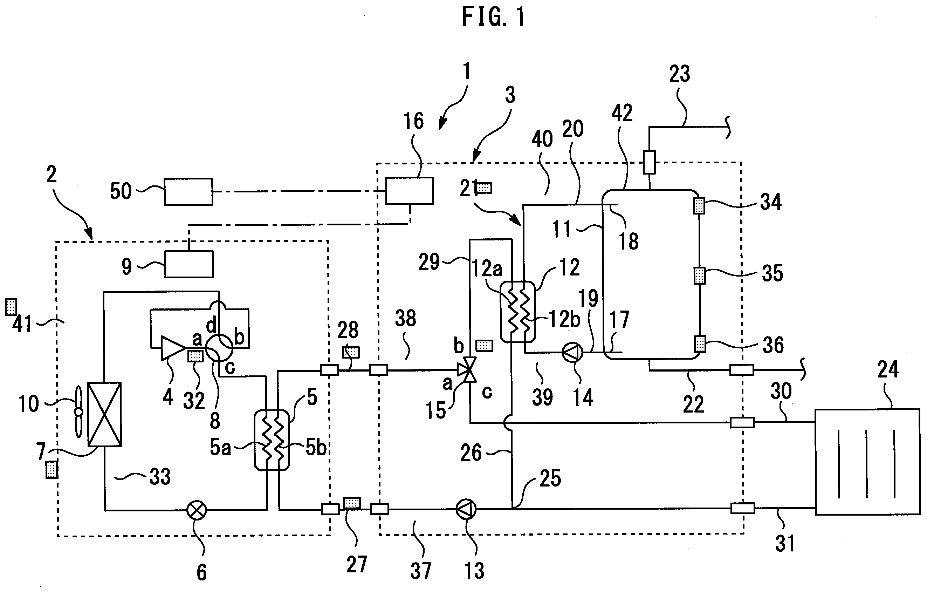

Fig. 1 is a diagram illustrating a hot-water supply system according to embodiment 1. As illustrated in Fig. 1, a hot-water supply system 1 of the present embodiment includes a heat pump unit 2, and a tank unit 3. The heat pump unit 2 is disposed outdoors. The tank unit 3 is disposed outdoors or indoors. In the present embodiment, the heat pump unit 2 and the tank unit 3 are separated from each other, but the hot-water supply system according to the present invention may have a structure in which the heat pump unit 2 and the tank unit 3 are integrated with each other.

The heat pump unit 2 includes a compressor 4 for compressing refrigerant, a first heat exchanger 5, an expansion valve 6, an air heat exchanger 7, a four-way valve 8, and a heat pump controller 9. A substance used as the refrigerant is not limited to a particular substance, but for example, CO₂, HFC, HC, HFO or the like may be used as the substance. The first heat exchanger 5 includes a primary flow path 5a and a secondary flow path 5b. Heat is exchanged between the refrigerant flowing in the primary flow path 5a and a heat medium flowing in the secondary flow path 5b. A substance used as the heat medium may be liquid water or brine other than water. The compressor 4, the primary flow path 5a, the expansion valve 6, the air heat exchanger 7, and the four-way valve 8 are connected via a refrigerant pipe, whereby a refrigerant circuit is formed.

The expansion valve 6 corresponds to a decompressor for decompressing and expanding high-pressure refrigerant. The air heat exchanger 7 exchanges the heat between outdoor air taken in from outside of the heat pump unit 2 and the refrigerant. The air heat exchanger 7 may function as an evaporator for evaporating the refrigerant using the heat of the outdoor air. The heat pump unit 2 may include a blower 10 for causing the outdoor air to flow through the air heat exchanger 7.

The four-way valve 8 includes a port *a*, a port b, a port *c*, and a port *d.* The port a of the four-way valve 8 is connected to a discharge port of the compressor 4 via the refrigerant pipe. The port *b* of the four-way valve 8 is connected to a suction port of the compressor 4 via the refrigerant pipe. The port *c* of the four-way valve 8 is connected to the primary flow path 5a of the first heat exchanger 5 via the refrigerant pipe. The port *d* of the four-way valve 8 is connected to the air heat exchanger 7 via the refrigerant pipe.

The four-way valve 8 switches the refrigerant flow path by moving a valve body, for example. The four-way valve 8 in the present embodiment corresponds to a refrigerant circuit switching valve for switching between a first refrigerant circuit and a second refrigerant circuit. The first refrigerant circuit is a circuit through which the refrigerant compressed by the compressor 4 flows into the first heat exchanger 5. Fig. 1 illustrates a state in which the first refrigerant circuit is formed. In this state, the four-way valve 8 causes the port *a* to communicate with the port *c*, and causes the port b to communicate with the port *d*. When the valve body of the four-way valve 8 is moved from the above-described state, the state is switched to a state in which the port *a* communicates with the port *d*, and the port b communicates with the port *c*. In the switched state, a second refrigerant circuit through which the refrigerant compressed by the compressor 4 flows into the air heat exchanger 7.

The tank unit 3 includes a hot-water storage tank 11, a second heat exchanger 12, a heat-medium pump 13, a water pump 14, a flow-path switching valve 15, and a tank unit controller 16.

The hot-water storage tank 11 stores hot water heated by the heat pump unit 2. In the hot-water storage tank 11, temperature stratification in which an upper side has high temperature and a lower side has low temperature is formed due to a difference in the specific gravity of water caused by a difference in temperature. The hot-water storage tank 11 is covered by a heat insulating material (not illustrated). A water outlet 17 is provided at a lower portion of the hot-water storage tank 11. A hot-water inlet 18 is provided at an upper portion of the hot-water storage tank 11.

The second heat exchanger 12 includes a primary flow path 12a and a secondary flow path 12b. Heat is exchanged between the heat medium flowing in the primary flow path 12a and the water flowing in the secondary flow path 12b. A water-feed path 19 connects the water outlet 17 to an inlet of the secondary flow path 12b. The water pump 14 is provided in a midway of the water-feed path 19. A water-return path 20 connects an outlet of the secondary flow path 12b to the hot-water inlet 18. A water circuit 21 is formed by the water-feed path 19, the secondary flow path 12b, and the water-return path 20. When the water pump 14 is worked, the water flows in the water circuit 21.

A water supply pipe 22 is connected to the lower portion of the hot-water storage tank 11. The water supply pipe 22 extends to the outside of the tank unit 3. For example, the water supplied from a water source such as a municipal water supply flows into the hot-water storage tank 11 through the water supply pipe 22. A hot-water supply pipe 23 is connected to the upper portion of the hot-water storage tank 11. The hot-water supply pipe 23 extends to the outside of the tank unit 3. The hot water stored in the hot-water storage tank 11 is supplied to, through the hot-water supply pipe 23, a hot-water supply terminal such as a shower, a faucet, or a bathtub, for example. When the hot water flows out of the hot-water storage tank 11 through the hot-water supply pipe 23, the water of an amount equal to that of the hot water having flowed out flows into the hot-water storage tank 11 from the water supply pipe 22. As a result, the hot-water storage tank 11 is kept in a fully filled state.

The hot-water supply system 1 of the present embodiment can perform an indoor-heating operation for causing the heat medium to be circulated through an indoor-heating device 24. The indoor-heating device 24 is installed in a room. The indoor-heating device 24 may include at least one of a floor heating panel installed under a floor, a radiator installed on an indoor wall, a panel heater, and a fan convector, for example. The hot-water supply system according to the present invention need not have a function of performing the indoor-heating operation. That is, the indoor-heating device 24 need not be provided.

A branch 25 is formed in a path on an upstream side of a suction port of the heat-medium pump 13. A path 26 connects an outlet of the primary flow path 12a to the branch 25. The flow-path switching valve 15 is a valve for switching the circuit in which the heat medium flows. The flow-path switching valve 15 includes a port *a* which is an inlet, a port b which is an outlet, and a port c which is an outlet.

The heat pump unit 2 and the tank unit 3 are connected to each other by paths 27 and 28. The path 27 connects a discharge port of the heat-medium pump 13 to an inlet of the secondary flow path 5b. The path 28 connects an outlet of the secondary flow path 5b to the port *a* of the flow-path switching valve 15. Each of the paths 27 and 28 has a portion disposed outside of the heat pump unit 2 and the tank unit 3. In a case where the installation place of the heat pump unit 2 and the installation place of the tank unit 3 are apart from each other, longer paths 27 and 28 are used. A path 29 connects the port b of the flow-path switching valve 15 to an inlet of the primary flow path 12a.

The tank unit 3 and the indoor-heating device 24 are connected to each other by paths 30 and 31. The path 30 connects the port *c* of the flow-path switching valve 15 to an inlet for the heat medium of the indoor-heating device 24. The path 31 connects an outlet for the heat medium of the indoor-heating device 24 to the branch 25.

A refrigerant temperature sensor 32 is disposed in the refrigerant pipe between the discharge port of the compressor 4 and the port *a* of the four-way valve 8. In the first refrigerant circuit, the refrigerant temperature sensor 32 can detect a discharge refrigerant temperature which is a temperature of the refrigerant discharged from the compressor 4. A refrigerant temperature sensor 33 is disposed in the refrigerant pipe between the expansion valve 6 and the air heat exchanger 7. In the first refrigerant circuit, the refrigerant temperature sensor 33 can detect a refrigerant inlet temperature which is a temperature of the refrigerant flowing from the expansion valve 6 into the air heat exchanger 7.

In the hot-water storage tank 11, a plurality of tank temperature sensors 34, 35, and 36 are provided at respective positions different in height from each other. The tank temperature sensors 34, 35, and 36 detect the water temperature in the hot-water storage tank 11. The tank temperature sensor 34 is disposed at the same height position as the hot-water inlet 18. The tank temperature sensor 36 is disposed at the same height position as the water outlet 17. The tank temperature sensor 35 is disposed at the position at a height higher than the water outlet 17 and lower than the hot-water inlet 18. In the following description, the temperature of the water in the upper portion of the hot-water storage tank 11 is referred to as an "upper tank temperature." The tank temperature sensor 34 in the present embodiment corresponds to an upper tank temperature sensor for detecting the upper tank temperature.

In the following description, the temperature of the heat medium flowing into the secondary flow path 5b is referred to as a "heat pump inlet temperature," and the temperature of the heat medium flowing out of the secondary flow path 5b is referred to as a "heat pump outlet temperature." A heat pump inlet temperature sensor 37 installed to the path 27 detects the heat pump inlet temperature. A heat pump outlet temperature sensor 38 installed to the path 28 detects the heat pump outlet temperature. In the illustrated example, the heat pump inlet temperature sensor 37 and the heat pump outlet temperature sensor 38 are disposed in the tank unit 3, but the heat pump inlet temperature sensor 37 and the heat pump outlet temperature sensor 38 may be disposed in the heat pump unit 2.

In the following description, the temperature of the water flowing from the hot-water storage tank 11 into the second heat exchanger 12 is referred to as an "inflow water temperature." The inflow water temperature can be detected by an inflow water temperature sensor 39 installed to the water-feed path 19. A tank inflow temperature sensor 40 installed to the water-return path 20 can detect the temperature of the hot water flowing from the second heat exchanger 12 into the hot-water storage tank 11. In the following description, the temperature detected by the tank inflow temperature sensor 40 is referred to as a "tank inflow temperature." An outdoor air temperature sensor 41 for detecting an outdoor air temperature is installed in the heat pump unit 2.

In the present embodiment, the hot-water storage tank 11 has an uppermost portion 42 for storing the hot water at a position higher than the hot-water inlet 18. An inlet of the hot-water supply pipe 23 is located in the uppermost portion 42. The hot-water supply pipe 23 is configured to take out the hot water in the uppermost portion 42. The hot water in the uppermost portion 42 is supplied to the outside through the hot-water supply pipe 23.

The heat pump controller 9 and the tank unit controller 16 are connected to be capable of performing bidirectional data communication by wiredly or wirelessly. The heat pump controller 9 and the tank unit controller 16 correspond to control circuitry configured to control the operation of the hot-water supply system 1. At least one of the heat pump controller 9 and the tank unit controller 16 may have a timer function of managing a time. At least one of the heat pump controller 9 and the tank unit controller 16 may have a calendar function of managing a date.

In the present embodiment, the heat pump controller 9 and the tank unit controller 16 cooperate with each other to control the operation of the hot-water supply system 1. The present invention is not limited to a configuration in which a plurality of controllers cooperate with each other to control the operation of the hot-water supply system 1 as in the illustrated example, and may adopt a configuration in which a single controller is used to control the operation of the hot-water supply system 1.

The hot-water supply system 1 of the present embodiment includes a remote controller 50. The remote controller 50 and the tank unit controller 16 are connected to be capable of performing bidirectional data communication by wiredly or wirelessly. The remote controller 50 may be installed in a room. The remote controller 50 has a function of receiving operations of a user concerning an operation action command, change of set values, and the others. The remote controller 50 corresponds to a user interface. Although not illustrated, on the remote controller 50, a display displaying information on a state of the hot-water supply system 1, operation sections such as a switch operated by a user, a speaker, a microphone and the like may be mounted. The hot-water supply system 1 may include a plurality of remote controllers 50 installed in different places. Instead of the remote controller 50 or in addition to the remote controller 50, a portable terminal such as a smartphone or a tablet terminal may be used as the user interface of the hot-water supply system 1, for example.

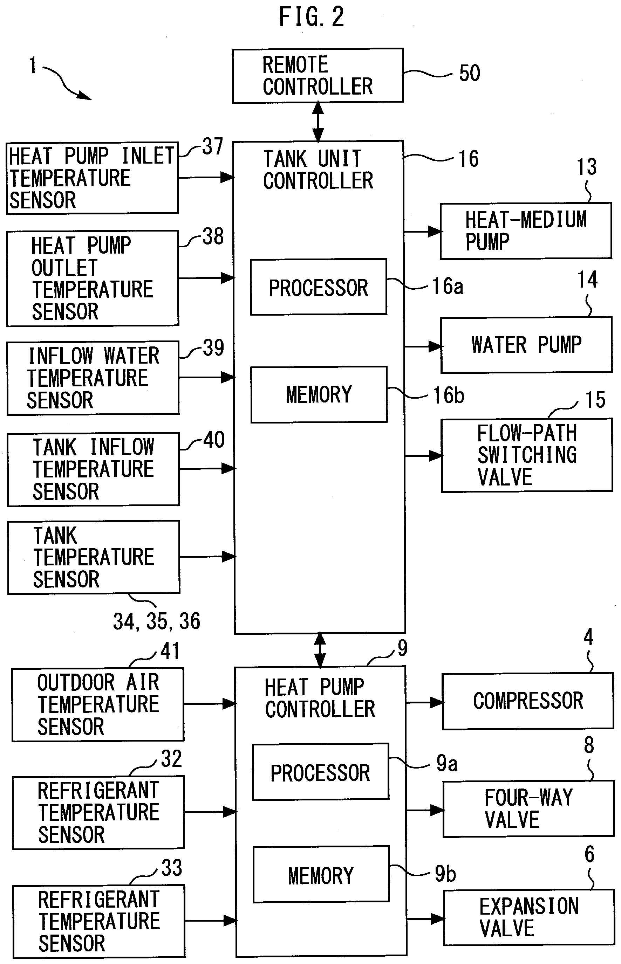

Fig. 2 is a functional block diagram of the hot-water supply system 1 according to embodiment 1. As illustrated in Fig. 2, each of the compressor 4, the expansion valve 6, the four-way valve 8, the refrigerant temperature sensor 32, the refrigerant temperature sensor 33, and the outdoor air temperature sensor 41 is electrically connected to the heat pump controller 9. Each of the heat-medium pump 13, the water pump 14, the flow-path switching valve 15, the tank temperature sensors 34, 35, and 36, the heat pump inlet temperature sensor 37, the heat pump outlet temperature sensor 38, the inflow water temperature sensor 39, and the tank inflow temperature sensor 40 is electrically connected to the tank unit controller 16.

Each function of the heat pump controller 9 may be implemented by processing circuitry. The processing circuitry of the heat pump controller 9 may include at least one processor 9a and at least one memory 9b. The at least one processor 9a may read out and execute the programs stored in the at least one memory 9b, thereby implementing each function of the heat pump controller 9. The processing circuitry of the heat pump controller 9 may include at least one piece of dedicated hardware.

Each function of the tank unit controller 16 may be implemented by processing circuitry. The processing circuitry of the tank unit controller 16 may include at least one processor 16a and at least one memory 16b. The at least one processor 16a may read out and execute the programs stored in the at least one memory 16b, thereby implementing each function of the tank unit controller 16. The processing circuitry of the tank unit controller 16 may include at least one piece of dedicated hardware.

The heat pump controller 9 can control the compressor 4 so that the rotational speed of the compressor 4 is variable by inverter control, for example. The tank unit controller 16 can control the heat-medium pump 13 and the water pump 14 so that each of the rotational speed of the heat-medium pump 13 and the rotational speed of the water pump 14 is variable by inverter control, for example.

The hot-water supply system 1 can perform a heat accumulating operation. The heat accumulating operation is an operation for causing the hot water flowing out of the second heat exchanger 12 to flow into the hot-water storage tank 11. The heat pump controller 9 and the tank unit controller 16 control the heat accumulating operation. The heat pump controller 9 and the tank unit controller 16 control an operation during the heat accumulating operation as follows. The compressor 4, the heat-medium pump 13, and the water pump 14 are driven. The first refrigerant circuit is formed by the four-way valve 8. In the flow-path switching valve 15, the port *a* communicates with the port b, whereby the port c is closed. The refrigerant compressed by the compressor 4 into a high-temperature and high-pressure state passes the ports *a* and c of the four-way valve 8, and flows into the primary flow path 5a of the first heat exchanger 5. The refrigerant flowing in the primary flow path 5a is cooled by the heat medium flowing in the secondary flow path 5b. The refrigerant having passed the primary flow path 5a is decompressed by the expansion valve 6, thereby becoming low-temperature and low-pressure refrigerant. The low-temperature and low-pressure refrigerant flows into the air heat exchanger 7. In the air heat exchanger 7, the heat is exchanged between the outdoor air blown by the blower 10 and the low-temperature and low-pressure refrigerant. The refrigerant is evaporated by being heated by the outdoor air in the air heat exchanger 7. The evaporated refrigerant passes the ports *d* and *b* of the four-way valve 8 and is sucked into the compressor 4. Hereinafter, a refrigeration cycle in which the refrigerant is thus circulated through the first refrigerant circuit is referred to a "normal cycle." In the normal cycle, the first heat exchanger 5 functions as a condenser or a gas cooler, and the air heat exchanger 7 functions as an evaporator.

The heat medium heated by the refrigerant in the first heat exchanger 5 flows into the primary flow path 12a of the second heat exchanger 12 through the path 28, the flow-path switching valve 15, and the path 29. The heat medium having passed the primary flow path 12a returns to the first heat exchanger 5 through the path 26, the branch 25, the heat-medium pump 13, and the path 27. Hereinafter, a circuit in which the heat medium is thus circulated through the first heat exchanger 5 and the second heat exchanger 12 is referred to as a "heat-medium circuit."

The water in the lower portion of the hot-water storage tank 11 flows into the secondary flow path 12b through the water outlet 17 and the water-feed path 19. In the second heat exchanger 12, the water flowing in the secondary flow path 12b is heated by the heat medium flowing in the primary flow path 12a. The heated hot water flows into the upper portion of the hot-water storage tank 11 through the water-return path 20 and the hot-water inlet 18. The hot water is accumulated in the hot-water storage tank 11 by such a heat accumulating operation, whereby an amount of stored heat in the hot-water storage tank 11 is increased.

Hereinafter, a target value of the temperature of the hot water flowing into the hot-water storage tank 11 in the heat accumulating operation is referred to as a "target hot-water storage temperature." The tank unit controller 16 may determine the target hot-water storage temperature in response to the hot-water supply set temperature set by a user using the remote controller 50. For example, the tank unit controller 16 may set, as the target hot-water storage temperature, the temperature equal to the hot-water supply set temperature or the temperature higher than the hot-water supply set temperature. The target hot-water storage temperature may be 65°C, for example.

The tank unit controller 16 can calculate an amount of hot-water storage or an amount of stored heat in the hot-water storage tank 11 using temperature distribution along the vertical direction in the hot-water storage tank 11 detected by the tank temperature sensors 34, 35, and 36. The tank unit controller 16 calculates a current amount of hot-water storage or a current amount of stored heat at predetermined time intervals. When the current amount of hot-water storage or the current amount of stored heat falls below a reference value, the heat pump controller 9 and the tank unit controller 16 start the heat accumulating operation. When the amount of hot-water storage or the amount of stored heat reaches the target value during the heat accumulating operation, the heat pump controller 9 and the tank unit controller 16 completes the heat accumulating operation.

The tank unit controller 16 may detect a hot-water supply load by detecting the temperature and amount of hot water flowing in the hot-water supply pipe 23 by sensors (not illustrated). The tank unit controller 16 may set a target value of the amount of hot-water storage or the amount of stored heat based on learning results obtained by statistically processing the hot-water supply loads in a plurality of past days.

Heating power [W] of the heat pump unit 2 is an amount of heat to be applied to the heat medium per unit time by the heat pump unit 2. The heat pump controller 9 can adjust the rotational speed of the compressor 4 so that predetermined heating power can be obtained. Hereinafter, the degree of superheating of the refrigerant sucked by the compressor 4 is referred to as a "suction superheating degree." The heat pump controller 9 may adjust an opening degree of the expansion valve 6 so that the suction superheating degree or the discharge refrigerant temperature detected by the refrigerant temperature sensor 32 is equal to the target value. As the opening degree of the expansion valve 6 becomes larger, the refrigerant flow rate increases, and the discharge refrigerant temperature and the suction superheating degree decrease.

The hot-water supply system 1 can perform the indoor-heating operation. The heat pump controller 9 and the tank unit controller 16 control the indoor-heating operation. The heat pump controller 9 and the tank unit controller 16 control an operation during the indoor-heating operation as follows. The compressor 4 and the heat-medium pump 13 are driven. The water pump 14 is stopped. In the flow-path switching valve 15, the port *a* communicates with the port c, whereby the port *b* is closed. The heat pump unit 2 performs a normal cycle operation in the same manner as the heat accumulating operation. The heat medium heated by the refrigerant in the first heat exchanger 5 flows into the indoor-heating device 24 through the path 28, the flow-path switching valve 15, and the path 30. The indoor-heating device 24 heats the room using the heat of the heat medium. The temperature of the heat medium decreases while the heat medium is passing the indoor-heating device 24. The heat medium whose temperature has decreased returns to the first heat exchanger 5 through the path 31, the branch 25, the heat-medium pump 13, and the path 27. Hereinafter, a circuit in which the heat medium is thus circulated through the first heat exchanger 5 and the indoor-heating device 24 is referred to as a "indoor-heating circuit."

In the present embodiment, the flow-path switching valve 15 switches between the indoor-heating circuit and the heat-medium circuit, thereby capable of switching between the indoor-heating operation and the heat accumulating operation. Accordingly, the flow-path switching valve 15 corresponds to switching means for switching between the indoor-heating operation and the heat accumulating operation.

When the heat pump unit 2 performs the normal cycle operation at a low outdoor air temperature, frost may stick to the air heat exchanger 7. The hot-water supply system 1 is configured to perform a defrosting operation for melting the frost sticking to the air heat exchanger 7. The heat pump controller 9 and the tank unit controller 16 control the defrosting operation. The heat pump controller 9 and the tank unit controller 16 control an operation during the defrosting operation as follows. In the defrosting operation, the heat pump controller 9 and the tank unit controller 16 work the compressor 4 and the heat-medium pump 13 while the water pump 14 and the blower 10 are stopped, and circulate the refrigerant through the second refrigerant circuit. The refrigerant compressed by the compressor 4 into a high-temperature and high-pressure state passes the ports *a* and *d* of the four-way valve 8, and flows into the air heat exchanger 7. The air heat exchanger 7 is heated from the inside thereof by the heat of the refrigerant. As a result, the frost sticking to the surface of the air heat exchanger 7 melts. The refrigerant is cooled while passing the air heat exchanger 7. The cooled refrigerant passes the expansion valve 6, and flows into the first heat exchanger 5. The refrigerant is heated upon receipt of the heat of the heat medium flowing in the secondary flow path 5b while passing the primary flow path 5a. The heated refrigerant passes the ports *c* and *b* of the four-way valve 8 and is sucked into the compressor 4. In such a defrosting operation, the air heat exchanger 7 functions as a condenser or a gas cooler, and the first heat exchanger 5 functions as an evaporator. Hereinafter, a refrigeration cycle in which the refrigerant is thus circulated through the above-described second refrigerant circuit is referred to an "inverse cycle."

When the frost sticks to the air heat exchanger 7 during the heat accumulating operation, the heat pump controller 9 and the tank unit controller 16 temporarily interrupt the heat accumulating operation to perform the defrosting operation. After the frost is removed by the defrosting operation, the heat pump controller 9 and the tank unit controller 16 restart the heat accumulating operation.

During the defrosting operation, in the first heat exchanger 5, the refrigerant is evaporated, whereby the heat medium is cooled. Before the start of the defrosting operation, the heat accumulating operation is performed, and therefore the heat medium is under high temperature. During the defrosting operation, the heat medium is circulated through the heat-medium circuit while being cooled by the first heat exchanger 5, whereby the temperature gradually decreases. According to the present embodiment, during the defrosting operation, the refrigerant receives the heat of the heat medium circulating the heat-medium circuit, at the first heat exchanger 5. As a result, the amount of heat of the refrigerant flowing into the air heat exchanger 7 becomes larger, whereby the frost of the air heat exchanger 7 can be melted quickly. Therefore, the defrosting operation can be completed in a short period of time.

During the defrosting operation, the heat medium is cooled in the first heat exchanger 5, whereby the heat pump outlet temperature decreases. Therefore, when the heat accumulating operation is restarted immediately after the defrosting operation is completed, the tank inflow temperature is not likely to be increased. As a result, the hot water having a temperature lower than the upper tank temperature flows in a large amount from the second heat exchanger 12 into the hot-water storage tank 11, which may greatly decrease the upper tank temperature. When the upper tank temperature decreases, it is unfavorable since the temperature of the hot water supplied through the hot-water supply pipe 23 decreases.

To prevent the upper tank temperature from decreasing as described above, the heat pump controller 9 and the tank unit controller 16 perform a recovery operation before restarting the heat accumulating operation after completing the defrosting operation. In the recovery operation, the heat pump controller 9 and the tank unit controller 16 work the compressor 4, the heat-medium pump 13, and the blower 10 while the water pump 14 is stopped, and circulate the refrigerant through the first refrigerant circuit. According to the recovery operation, the heat medium is heated by the first heat exchanger 5, whereby the heat pump outlet temperature is increased. Since the water pump 14 is stopped during the recovery operation, the low-temperature water does not flow into the upper portion of the hot-water storage tank 11. Therefore, the upper tank temperature does not decrease. Since the water does not flow in the secondary flow path 5b during the recovery operation, the heat pump outlet temperature can be increased quickly. After the heat pump outlet temperature is increased by the recovery operation, the heat pump controller 9 and the tank unit controller 16 start the water pump 14, and restart the heat accumulating operation. In the above manner, immediately after the restart of the heat accumulating operation, the water can be sufficiently heated by the second heat exchanger 12, whereby the tank inflow temperature can be sufficiently increased. In this way, according to the present embodiment, the decrease in the temperature of the hot water in the hot-water storage tank can be reduced more reliably in returning the defrosting operation to the heat accumulating operation.

The tank unit controller 16 may restart the water pump 14 on the condition that the heat pump outlet temperature detected by the heat pump outlet temperature sensor 38 has reached a first reference temperature during the recovery operation. That is, the tank unit controller 16 may complete the recovery operation and restart the heat accumulating operation when the heat pump outlet temperature reaches the first reference temperature.

The tank unit controller 16 may determine the first reference temperature in response to the upper tank temperature detected by the tank temperature sensor 34. The tank unit controller 16 may determine the temperature equal to the upper tank temperature, as the first reference temperature. Alternatively, the tank unit controller 16 may determine the temperature slightly higher than the upper tank temperature, as the first reference temperature. That is, the first reference temperature is a temperature equal to or higher than the upper tank temperature.

The second heat exchanger 12 can heat the water so that the tank inflow temperature is slightly lower than the heat pump outlet temperature. When the water pump 14 is restarted after the heat pump outlet temperature during the recovery operation reaches the first reference temperature equal to or higher than the upper tank temperature, the tank inflow temperature immediately after the restart of the heat accumulating operation becomes a temperature that is closer to the upper tank temperature. Therefore, the decrease in the upper tank temperature can be prevented more reliably.

When the hot water is stored in the hot-water storage tank 11 for a long time, the heat of the hot water is dissipated, whereby the upper tank temperature may be likely to be lower than the hot-water supply set temperature. When the amount of the hot water in the hot-water storage tank 11 is very small, the upper tank temperature may be lower than the hot-water supply set temperature. The first reference temperature is determined in response to the upper tank temperature. Therefore, when the upper tank temperature is low, the first reference temperature is also low. Accordingly, when the upper tank temperature is low, since the first reference temperature is also low, the recovery operation is shifted to the heat accumulating operation at an earlier timing than when the upper tank temperature is high. That is, when the upper tank temperature is low, the shift timing from the recovery operation to the heat accumulating operation becomes earlier. As a result, the heat accumulating operation can be restarted early. That is, it is possible to reliably prevent the shift timing from the recovery operation to the heat accumulating operation from being delayed more than necessary when the upper tank temperature is low.

According to the present embodiment, the following advantages are obtained. The hot-water inlet 18 and the tank temperature sensor 34 are located at positions lower than the uppermost portion 42. Therefore, the temperature detected by the tank temperature sensor 34 may be lower than the temperature of the hot water in the uppermost portion 42. The tank unit controller 16 determines the first reference temperature in response to the upper tank temperature detected by the tank temperature sensor 34. Therefore, even when the temperature detected by the tank temperature sensor 34 is lower than the temperature of the hot water in the uppermost portion 42, the first reference temperature is determined in response to the temperature detected by the tank temperature sensor 34. Accordingly, when the temperature detected by the tank temperature sensor 34 is lower than the temperature of the hot water in the uppermost portion 42, the tank inflow temperature immediately after the restart of the heat accumulating operation is lower than the temperature of the hot water in the uppermost portion 42. At this time, the hot water having flowed into the hot-water storage tank 11 is diffused from the hot-water inlet 18 in the horizontal direction or the downward direction due to a difference in specific gravity and is mixed with the hot water stored in the hot-water storage tank 11. Therefore, the hot water having flowed into the hot-water storage tank 11 is not likely to be mixed with the hot water in the uppermost portion 42. As a result, since it is possible to reliably prevent decrease in the temperature of the hot water in the uppermost portion 42, there is an advantage that it is possible to reliably prevent the decrease in temperature of the hot water supplied to the hot-water supply pipe 23. Additionally, there is an advantage that it is possible to reliably prevent the shift timing from the recovery operation to the heat accumulating operation from being delayed more than necessary when the temperature detected by the tank temperature sensor 34 is lower than the temperature of the hot water in the uppermost portion 42.

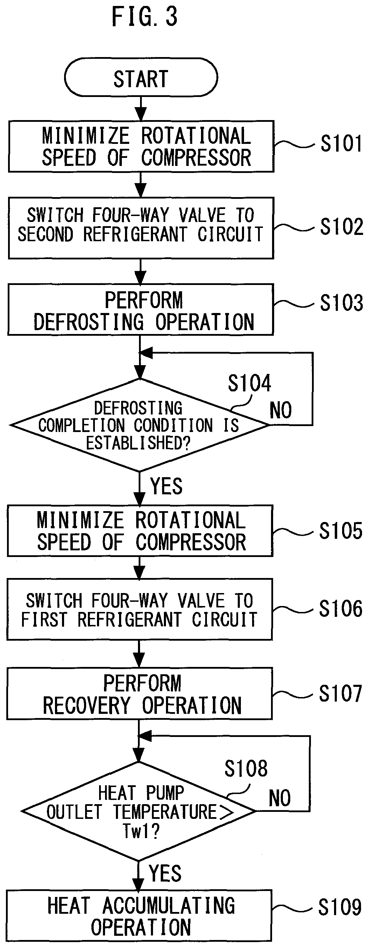

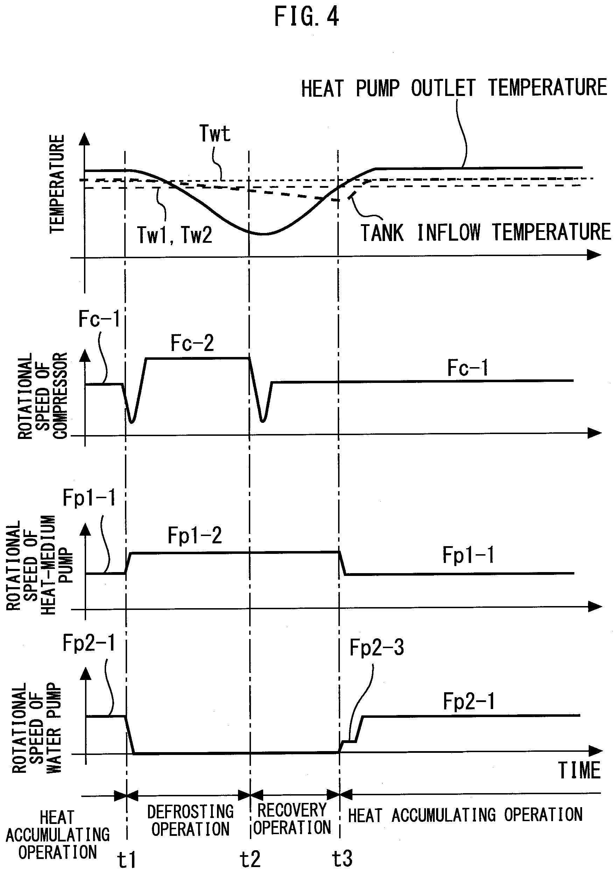

Fig. 3 is a flowchart illustrating an example of processes when the defrosting operation is performed on a hot-water supply system according to the invention. Fig. 4 is a graph illustrating an example of a change over time in each of the temperature detected by the heat pump outlet temperature sensor 38, the temperature detected by the tank inflow temperature sensor 40, the rotational speed of the compressor 4, the rotational speed of the heat-medium pump 13, and the rotational speed of the water pump 14, when the heat accumulating operation is interrupted and the defrosting operation and the recovery operation are performed, and then the heat accumulating operation is restarted on a hot-water supply system according to the invention. Hereinafter, the present embodiment will be further described based on the example illustrated in Figs. 3 and 4.

During the heat accumulating operation, the heat pump controller 9 determines whether the frost is sticking to the air heat exchanger 7. For example, the heat pump controller 9 may determine that the frost is sticking to the air heat exchanger 7 when a refrigerant inlet temperature Te of the air heat exchanger 7 detected by the refrigerant temperature sensor 33 becomes equal to or lower than the first reference value and a difference between an outdoor air temperature Ta detected by the outdoor air temperature sensor 41 and the refrigerant inlet temperature Te becomes equal to or greater than a second reference value. When it is determined that the frost is sticking to the air heat exchanger 7, the heat pump controller 9 and the tank unit controller 16 perform the defrosting operation according to the processes of the flowchart in Fig. 3. In Fig. 4, the defrosting operation is started at a time t1.

In step S101 of Fig. 3, the heat pump controller 9 sets the rotational speed of the compressor 4 to a minimum speed as preparation for switching the four-way valve 8. Next, as step S 102, the heat pump controller 9 switches the four-way valve 8 from the first refrigerant circuit of the normal cycle to the second refrigerant circuit of the inverse cycle. Also, the heat pump controller 9 stops the blower 10.

Subsequently, as step S103, the heat pump controller 9 and the tank unit controller 16 perform the defrosting operation. The heat pump controller 9 may work the compressor 4 so that a rotational speed Fc-2 of the compressor 4 during the defrosting operation is higher than the rotational speed Fc-1 of the compressor 4 during the heat accumulating operation. In this way, the refrigerant flow rate during the defrosting operation is increased, whereby the defrosting operation can be completed more quickly. The tank unit controller 16 preferably works the heat-medium pump 13 so that a rotational speed Fp1-2 of the heat-medium pump 13 during the defrosting operation is higher than a rotational speed Fp1-1 of the heat-medium pump 13 during the heat accumulating operation. In this way, as a first advantage, a heat exchange rate in the first heat exchanger 5 is increased, whereby the defrosting operation can be completed more quickly. As a second advantage, it is possible to reliably prevent the heat medium from being frozen in the first heat exchanger 5 acting as the evaporator. For the same reason, the tank unit controller 16 more preferably works the heat-medium pump 13 at the maximum rotational speed during the defrosting operation.

During the defrosting operation, the water pump 14 is stopped, and the water does not flow in the water circuit 21. Therefore, the heat is dissipated to the surroundings naturally, whereby the water temperature in the secondary flow path 12b and the water temperature in the water-return path 20 gradually decrease.

During the defrosting operation, as step S104, the heat pump controller 9 determines whether a defrosting completion condition is established. When the defrosting completion condition is established, the defrosting operation is completed. When the defrosting completion condition is not established, the heat pump controller 9 continues the defrosting operation, and repeats the process of step S104. The heat pump controller 9 may determine that the defrosting completion condition is established when the refrigerant temperature sensor 33 detects a temperature Tf of the refrigerant flowing out of the air heat exchanger 7 and the temperature Tf becomes equal to or higher than a third reference value, for example.

When the defrosting completion condition is established, in step S105, the heat pump controller 9 sets the rotational speed of the compressor 4 to the minimum speed as the preparation for switching the four-way valve 8. Next, as step S106, the heat pump controller 9 switches the four-way valve 8 from the second refrigerant circuit of the inverse cycle to the first refrigerant circuit of the normal-cycle. Also, the heat pump controller 9 stops the blower 10.

Subsequently, as step S107, the heat pump controller 9 and the tank unit controller 16 perform the recovery operation. In Fig. 4, the recovery operation is started at a time t2. The heat pump controller 9 may work the compressor 4 so that a rotational speed of the compressor 4 during the recovery operation is equal to the rotational speed Fc-1 of the compressor 4 during the heat accumulating operation. It is preferable that the tank unit controller 16 works the heat-medium pump 13 so that the rotational speed Fp1-2 of the heat-medium pump 13 during the recovery operation is higher than the rotational speed Fp1-1 of the heat-medium pump 13 during the heat accumulating operation. In this way, the temperature of the heat medium in the heat-medium circuit can be increased more quickly. In particular, even when the path 27 and the path 28 are long, the heat pump outlet temperature can be increased quickly. For the same reason, the tank unit controller 16 more preferably works the heat-medium pump 13 at the maximum rotational speed during the recovery operation.

The tank unit controller 16 determines a first reference temperature Tw1 in response to the upper tank temperature detected by the tank temperature sensor 34. During the recovery operation, as step S108, the tank unit controller 16 compares the heat pump outlet temperature detected by the heat pump outlet temperature sensor 38 with the first reference temperature Tw1. When the heat pump outlet temperature does not reach the first reference temperature Tw1, the recovery operation of step S107 is continued. When the heat pump outlet temperature reaches the first reference temperature Tw1, the tank unit controller 16 starts the water pump 14, and restarts the heat accumulating operation of step S109. In Fig. 4, the heat accumulating operation is restarted at a time t3.

When the heat accumulating operation is restarted, the tank unit controller 16 works the heat-medium pump 13 at the rotational speed Fp 1-1 lower than the rotational speed Fp1-2 in the defrosting operation and the recovery operation. Additionally, the tank unit controller 16 preferably works the water pump 14 at the minimum rotational speed Fp2-3 when completing the recovery operation and restarting the heat accumulating operation. In this way, the tank inflow temperature can be increased more quickly and the amount of low-temperature water flowing from the water-return path 20 to the hot-water storage tank 11 can be reduced reliably, immediately after the water pump 14 is started. As a result, it is possible to more reliably prevent the decrease in the temperature of the hot water in the hot-water storage tank 11.

When the rotational speed of the water pump 14 is fixed to the minimum rotational speed Fp2-3 immediately after the heat accumulating operation is restarted, the tank unit controller 16 may set the second reference temperature Tw2 as a reference for releasing the fixing. For example, the tank unit controller 16 may set the temperature equal to the first reference temperature Tw1 as the second reference temperature Tw2, or the temperature higher than the first reference temperature Tw1 as the second reference temperature Tw2. The second reference temperature Tw2 may be a temperature equal to the target hot-water storage temperature. The tank unit controller 16 compares the tank inflow temperature detected by the tank inflow temperature sensor 40 with the second reference temperature Tw2. When the tank inflow temperature reaches the second reference temperature Tw2, the tank unit controller 16 releases the above-described fixing to increase the rotational speed of the water pump 14. Thus, the heat accumulating operation is shifted to a steady state.

During the heat accumulating operation in the steady state, the tank unit controller 16 preferably controls the rotational speed of the heat-medium pump 13 so that a difference between the heat pump outlet temperature and the heat pump inlet temperature is equal to a constant target value. In this way, the flow rate of the heat medium becomes proper more reliably, which enabling higher efficient operation. Additionally, in the heat accumulating operation in the steady state, the tank unit controller 16 controls the rotational speed of the water pump 14 so that the tank inflow temperature is equal to a target hot-water storage temperature Twt.

In the example in Fig. 4, the rotational speed of the heat-medium pump 13 is constant during the recovery operation, but the tank unit controller 16 may continuously or stepwise decrease the rotational speed of the heat-medium pump 13 as the heat pump outlet temperature increases during the recovery operation.

In the example illustrated in Figs. 3 and 4, the hot-water supply system 1 shifts from the recovery operation to the heat accumulating operation in response to a result of the tank unit controller 16 comparing the heat pump outlet temperature to the first reference temperature Tw1. Without being limited to this example, the hot-water supply system 1 may complete the recovery operation and restart the heat accumulating operation when the duration of the recovery operation reaches a reference time, for example. In this way, it is possible to more reliably prevent the restart timing of the heat accumulating operation from being delayed.

### Reference Signs List

- 1: hot-water supply system
- 2: heat pump unit
- 3: tank unit
- 4: compressor
- 5: first heat exchanger
- 6: expansion valve
- 7: air heat exchanger
- 8: four-way valve
- 9: heat pump controller
- 10: blower
- 11: hot-water storage tank
- 12: second heat exchanger
- 13: heat-medium pump
- 14: water pump
- 15: flow-path switching valve
- 16: tank unit controller
- 17: water outlet
- 18: hot-water inlet
- 21: water circuit
- 22: water supply pipe
- 23: hot-water supply pipe
- 24: indoor-heating device
- 32: refrigerant temperature sensor
- 33: refrigerant temperature sensor
- 34, 35, 36: tank temperature sensor
- 37: heat pump inlet temperature sensor
- 38: heat pump outlet temperature sensor
- 39: inflow water temperature sensor
- 40: tank inflow temperature sensor
- 41: outdoor air temperature sensor
- 42: uppermost portion
- 50: remote controller

## Claims

1. A hot-water supply system (1) comprising:
a compressor (4) for compressing refrigerant;
an air heat exchanger (7) for exchanging heat between the refrigerant and air;
a first heat exchanger (5) for exchanging heat between the refrigerant and a heat medium;
a refrigerant circuit switching valve (8) for switching between a first refrigerant circuit through which the refrigerant compressed by the compressor (4) flows into the first heat exchanger (5) and a second refrigerant circuit through which the refrigerant compressed by the compressor (4) flows into the air heat exchanger (7);
a second heat exchanger (12) for exchanging heat between the heat medium and water;
a heat-medium circuit (15, 25, 26, 27, 28, 29) connecting the first heat exchanger (5) to the second heat exchanger (12);
a heat-medium pump (13) for circulating the heat medium in the heat-medium circuit (15, 25, 26, 27, 28, 29);
a hot-water storage tank (11) including a lower portion provided with a water outlet (17), and an upper portion provided with a hot-water inlet (18) at a level higher than a level of the water outlet (17);
a water-feed path (19) connecting the water outlet (17) to the second heat exchanger (12);
a water-return path (20) connecting the second heat exchanger (12) to the hot-water inlet (18);
a water pump (14) for circulating the water in a water circuit formed by the water-feed path (19), the second heat exchanger (12), and the water-return path (20); and
control circuitry (9, 16) configured to control a heat accumulating operation for causing hot water flowing out of the second heat exchanger (12) to flow into the hot-water storage tank (11) and a defrosting operation for melting frost sticking to the air heat exchanger (7), the control circuitry (9, 16) being configured to:
in the heat accumulating operation, work the compressor (4), the heat-medium pump (13), and the water pump (14), and circulate the refrigerant through the first refrigerant circuit;
in the defrosting operation, work the compressor (4) and the heat-medium pump (13) while the water pump (14) is stopped and circulate the refrigerant through the second refrigerant circuit;
**characterized in that** the control circuitry is configured to:
perform a recovery operation before restarting the heat accumulating operation after the defrosting operation; and
in the recovery operation, work the compressor (4) and the heat-medium pump (13) while the water pump (14) is stopped and circulate the refrigerant through the first refrigerant circuit.

2. The hot-water supply system (1) according to claim 1, further comprising:
a heat pump outlet temperature sensor for detecting a heat pump outlet temperature which is a temperature of the heat medium flowing out of the first heat exchanger (5); and
an upper tank temperature sensor for detecting an upper tank temperature which is a water temperature in the upper portion of the hot-water storage tank (11),
wherein the control circuitry (9, 16) is configured to determine a first reference temperature in response to the upper tank temperature,
the first reference temperature is a temperature equal to the upper tank temperature or higher than the upper tank temperature, and
the control circuitry (9, 16) is configured to complete the recovery operation and restart the heat accumulating operation, when the heat pump outlet temperature reaches the first reference temperature during the recovery operation.

3. The hot-water supply system (1) according to claim 1, wherein the control circuitry (9, 16) is configured to complete the recovery operation and restart the heat accumulating operation, when a duration of the recovery operation reaches a reference time.

4. The hot-water supply system (1) according to any one of claims 1 to 3, wherein the hot-water storage tank (11) has an uppermost portion (42) for storing hot water at a position higher than the hot-water inlet (18).

5. The hot-water supply system (1) according to claim 4, wherein a hot-water supply pipe (23) for taking out the hot water in the uppermost portion (42) is connected to the hot-water storage tank (11).

6. The hot-water supply system (1) according to any one of claims 1 to 5, wherein the control circuitry (9, 16) is configured to work the heat-medium pump (13) so that a rotational speed of the heat-medium pump (13) during the defrosting operation is higher than a rotational speed of the heat-medium pump (13) during the heat accumulating operation.

7. The hot-water supply system (1) according to any one of claims 1 to 6, wherein the control circuitry (9, 16) is configured to work the heat-medium pump (13) so that a rotational speed of the heat-medium pump (13) during the recovery operation is higher than a rotational speed of the heat-medium pump (13) during the heat accumulating operation.

8. The hot-water supply system (1) according to any one of claims 1 to 7, wherein the control circuitry (9, 16) is configured to work the heat-medium pump (13) at a maximum rotational speed during the defrosting operation and the recovery operation.

9. The hot-water supply system (1) according to any one of claims 1 to 8, wherein the control circuitry (9, 16) is configured to work the water pump (14) at a minimum rotational speed when the recovery operation is completed and the heat accumulating operation is restarted.

## Patentansprüche

1. Warmwasserversorgungssystem (1), aufweisend:
einen Verdichter (4) zum Verdichten von Kältemittel;
einen Luftwärmetauscher (7) zum Austauschen von Wärme zwischen dem Kältemittel und Luft;
einen ersten Wärmetauscher (5) zum Austauschen von Wärme zwischen dem Kältemittel und einem Wärmemedium;
ein Kältemittelkreislauf-Schaltventil (8) zum Schalten zwischen einem ersten Kältemittelkreislauf, durch den das vom Verdichter (4) verdichtete Kältemittel in den ersten Wärmetauscher (5) strömt, und einem zweiten Kältemittelkreislauf, durch den das vom Verdichter (4) verdichtete Kältemittel in den Luftwärmetauscher (7) strömt;
einen zweiten Wärmetauscher (12) zum Austauschen von Wärme zwischen dem Wärmemedium und Wasser;
einen Wärmemediumkreislauf (15, 25, 26, 27, 28, 29), der den ersten Wärmetauscher (5) mit dem zweiten Wärmetauscher (12) verbindet;
eine Wärmemediumpumpe (13) zum Zirkulieren des Wärmemediums im Wärmemediumkreislauf (15, 25, 26, 27, 28, 29);
einen Warmwasserspeicherbehälter (11) mit einem unteren Abschnitt, der mit einem Wasserauslass (17) vorgesehen ist, und einem oberen Abschnitt, der mit einem Warmwassereinlass (18) vorgesehen ist, der auf einem höheren Niveau als das Niveau des Wasserauslasses (17) liegt;
einen Wasserzufuhrweg (19), der den Wasserauslass (17) mit dem zweiten Wärmetauscher (12) verbindet;
einen Wasserrücklaufweg (20), der den zweiten Wärmetauscher (12) mit dem Warmwassereinlass (18) verbindet;
eine Wasserpumpe (14) zum Zirkulieren des Wassers in einem Wasserkreislauf, der durch den Wasserzufuhrweg (19), den zweiten Wärmetauscher (12) und den Wasserrücklaufweg (20) gebildet wird; und
eine Steuerschaltung (9, 16), die eingerichtet ist zum Steuern eines Wärmeakkumulationsbetriebs, um zu bewirken, dass Warmwasser, das aus dem zweiten Wärmetauscher (12) strömt, in den Warmwasserspeicherbehälter (11) strömt, und eines Entfrostungsbetriebs zum Schmelzen von Frost, der an dem Luftwärmetauscher (7) haftet, wobei die Steuerschaltung (9, 16) eingerichtet ist zum:
im Wärmeakkumulationsbetrieb, Betreiben des Verdichters (4), der Wärmemediumpumpe (13) und der Wasserpumpe (14), und Zirkulieren des Kältemittels durch den ersten Kältemittelkreislauf;
im Entfrostungsbetrieb, Betreiben des Verdichters (4) und der Wärmemediumpumpe (13), während die Wasserpumpe (14) angehalten wird, und Zirkulieren des Kältemittels durch den zweiten Kältemittelkreislauf;
**dadurch gekennzeichnet, dass** die Steuerschaltung eingerichtet ist zum:
Durchführen eines Wiederherstellungsbetriebs, bevor der Wärmeakkumulationsbetrieb nach dem Entfrostungsbetrieb wieder aufgenommen wird; und
im Wiederherstellungsbetrieb, Betreiben des Verdichters (4) und der Wärmemediumpumpe (13), während die Wasserpumpe (14) angehalten wird, und Zirkulieren des Kältemittels durch den ersten Kältemittelkreislauf.

2. Warmwasserversorgungssystem (1) nach Anspruch 1, ferner aufweisend:
einen Wärmepumpenauslasstemperatursensor zum Erfassen einer Wärmepumpenauslasstemperatur, die eine Temperatur des aus dem ersten Wärmetauscher (5) strömenden Wärmemediums ist; und
einen Oberer-Behälter-Temperatursensor zum Erfassen einer Oberer-Behälter-Temperatur, die eine Wassertemperatur im oberen Abschnitt des Warmwasserspeicherbehälters (11) ist,
wobei die Steuerschaltung (9, 16) eingerichtet ist, in Abhängigkeit von der Oberer-Behälter-Temperatur eine erste Referenztemperatur zu bestimmen,
die erste Referenztemperatur eine Temperatur ist, die gleich der Oberer-Behälter-Temperatur ist oder höher als die Oberer-Behälter-Temperatur ist, und
die Steuerschaltung (9, 16) eingerichtet ist, den Wiederherstellungsbetrieb abzuschließen und den Wärmeakkumulationsbetrieb wieder aufzunehmen, wenn die Wärmepumpenauslasstemperatur während des Wiederherstellungsbetriebs die erste Referenztemperatur erreicht.

3. Warmwasserversorgungssystem (1) nach Anspruch 1, wobei die Steuerschaltung (9, 16) eingerichtet ist, den Wiederherstellungsbetrieb abzuschließen und den Wärmeakkumulationsbetrieb wieder aufzunehmen, wenn eine Dauer des Wiederherstellungsbetriebs eine Referenzzeit erreicht.

4. Warmwasserversorgungssystem (1) nach einem der Ansprüche 1 bis 3, wobei der Warmwasserspeicherbehälter (11) einen obersten Abschnitt (42) zum Speichern von Warmwasser an einer Stelle aufweist, die höher als der Warmwassereinlass (18) liegt.

5. Warmwasserversorgungssystem (1) nach Anspruch 4, wobei eine Warmwasserversorgungsleitung (23) zur Entnahme des Warmwassers im obersten Abschnitt (42) mit dem Warmwasserspeicherbehälter (11) verbunden ist.

6. Warmwasserversorgungssystem (1) nach einem der Ansprüche 1 bis 5, wobei die Steuerschaltung (9, 16) eingerichtet ist, die Wärmemediumpumpe (13) so zu betreiben, dass eine Drehzahl der Wärmemediumpumpe (13) während des Entfrostungsbetriebs höher ist als eine Drehzahl der Wärmemediumpumpe (13) während des Wärmeakkumulationsbetriebs.

7. Warmwasserversorgungssystem (1) nach einem der Ansprüche 1 bis 6, wobei die Steuerschaltung (9, 16) eingerichtet ist, die Wärmemediumpumpe (13) so zu betreiben, dass eine Drehzahl der Wärmemediumpumpe (13) während des Wiederherstellungsbetriebs höher ist als eine Drehzahl der Wärmemediumpumpe (13) während des Wärmeakkumulationsbetriebs.

8. Warmwasserversorgungssystem (1) nach einem der Ansprüche 1 bis 7, wobei die Steuerschaltung (9, 16) eingerichtet ist, die Wärmemediumpumpe (13) während des Entfrostungsbetriebs und des Wiederherstellungsbetriebs bei maximaler Drehzahl zu betreiben,

9. Warmwasserversorgungssystem (1) nach einem der Ansprüche 1 bis 8, wobei die Steuerschaltung (9, 16) eingerichtet ist, die Wasserpumpe (14) mit einer minimalen Drehzahl zu betreiben, wenn der Wiederherstellungsbetrieb abgeschlossen und der Wärmeakkumulationsbetrieb wieder aufgenommen wird.

## Revendications

1. Système d'alimentation en eau chaude (1) comprenant :
un compresseur (4) pour comprimer le fluide frigorigène ;
un échangeur de chaleur à air (7) destiné à échanger de la chaleur entre le fluide frigorigène et l'air ;
un premier échangeur de chaleur (5) destiné à échanger de la chaleur entre le fluide frigorigène et un milieu caloporteur ;
une vanne de commutation de circuit de fluide frigorigène (8) pour commuter entre un premier circuit de fluide frigorigène dans lequel le fluide frigorigène comprimé par le compresseur (4) s'écoule dans le premier échangeur de chaleur (5) et un second circuit de fluide frigorigène dans lequel le fluide frigorigène comprimé par le compresseur (4) s'écoule dans l'échangeur de chaleur à air (7) ;
un second échangeur de chaleur (12) destiné à échanger de la chaleur entre le fluide caloporteur et de l'eau ;
un circuit de fluide caloporteur (15, 25, 26, 27, 28, 29) reliant le premier échangeur de chaleur (5) au second échangeur de chaleur (12) ;
une pompe à milieu caloporteur (13) pour faire circuler le milieu caloporteur dans le circuit de milieu caloporteur (15, 25, 26, 27, 28, 29) ;
un réservoir de stockage d'eau chaude (11) comprenant une partie inférieure munie d'une sortie d'eau (17) et une partie supérieure munie d'une entrée d'eau chaude (18) à un niveau supérieur à un niveau de la sortie d'eau (17) ;
une voie d'alimentation en eau (19) reliant la sortie d'eau (17) au second échangeur de chaleur (12) ;
une voie de retour d'eau (20) reliant le second échangeur de chaleur (12) à l'entrée d'eau chaude (18) ;
une pompe à eau (14) destinée à faire circuler l'eau dans un circuit d'eau formé par la voie d'alimentation en eau (19), le second échangeur de chaleur (12) et la voie de retour d'eau (20) ; et
un circuit de commande (9, 16) configuré pour commander une opération d'accumulation de chaleur pour amener l'eau chaude s'écoulant hors du second échangeur de chaleur (12) à s'écouler dans le réservoir de stockage d'eau chaude (11) et une opération de dégivrage destinée à faire fondre le givre collé à l'échangeur de chaleur à air (7), le circuit de commande (9, 16) étant configuré pour :
dans l'opération d'accumulation de chaleur, faire fonctionner le compresseur (4), la pompe à milieu caloporteur (13) et la pompe à eau (14), et faire circuler le fluide frigorigène dans le premier circuit de fluide frigorigène ;
dans l'opération de dégivrage, faire fonctionner le compresseur (4) et la pompe à milieu caloporteur (13) alors que la pompe à eau (14) est arrêtée et faire circuler le fluide frigorigène dans le second circuit de fluide frigorigène ;
**caractérisé en ce que** le circuit de commande est configuré pour :
effectuer une opération de récupération avant de redémarrer l'opération d'accumulation de chaleur après l'opération de dégivrage ; et
dans l'opération de récupération, faire fonctionner le compresseur (4) et la pompe à milieu caloporteur (13) alors que la pompe à eau (14) est arrêtée et faire circuler le fluide frigorigène dans le premier circuit de fluide frigorigène.

2. Système d'alimentation en eau chaude (1) selon la revendication 1, comprenant en outre :
un capteur de température de sortie de pompe à chaleur pour détecter une température de sortie de pompe à chaleur qui est une température du milieu caloporteur s'écoulant hors du premier échangeur de chaleur (5) ; et
un capteur de température de réservoir supérieure pour détecter une température de réservoir supérieure qui est une température de l'eau dans la partie supérieure du réservoir de stockage d'eau chaude (11),
dans lequel le circuit de commande (9, 16) est configuré pour déterminer une première température de référence en réponse à la température de réservoir supérieure,
la première température de référence est une température égale à la température de réservoir supérieure ou supérieure à la température de réservoir supérieure, et
le circuit de commande (9, 16) est configuré pour achever l'opération de récupération et redémarrer l'opération d'accumulation de chaleur lorsque la température de sortie de la pompe à chaleur atteint la première température de référence pendant l'opération de récupération.

3. Système d'alimentation en eau chaude (1) selon la revendication 1, dans lequel le circuit de commande (9, 16) est configuré pour achever l'opération de récupération et redémarrer l'opération d'accumulation de chaleur lorsqu'une durée de l'opération de récupération atteint un temps de référence.

4. Système d'alimentation en eau chaude (1) selon l'une quelconque des revendications 1 à 3, dans lequel le réservoir de stockage d'eau chaude (11) comporte une partie la plus élevée (42) pour stocker l'eau chaude à une position plus élevée que l'entrée d'eau chaude (18).

5. Système d'alimentation en eau chaude (1) selon la revendication 4, dans lequel un tuyau d'alimentation en eau chaude (23) destiné à extraire l'eau chaude dans la partie la plus élevée (42) est relié au réservoir de stockage d'eau chaude (11).

6. Système d'alimentation en eau chaude (1) selon l'une quelconque des revendications 1 à 5, dans lequel le circuit de commande (9, 16) est configuré pour faire fonctionner la pompe à milieu caloporteur (13) de sorte qu'une vitesse de rotation de la pompe à milieu caloporteur (13) pendant l'opération de dégivrage soit plus élevée qu'une vitesse de rotation de la pompe à milieu caloporteur (13) pendant l'opération d'accumulation de chaleur.

7. Système d'alimentation en eau chaude (1) selon l'une quelconque des revendications 1 à 6, dans lequel le circuit de commande (9, 16) est configuré pour faire fonctionner la pompe à milieu caloporteur (13) de sorte qu'une vitesse de rotation de la pompe à milieu caloporteur (13) pendant l'opération de récupération soit plus élevée qu'une vitesse de rotation de la pompe à milieu caloporteur (13) pendant l'opération d'accumulation de chaleur.

8. Système d'alimentation en eau chaude (1) selon l'une quelconque des revendications 1 à 7, dans lequel le circuit de commande (9, 16) est configuré pour faire fonctionner la pompe à milieu caloporteur (13) à une vitesse de rotation maximale pendant l'opération de dégivrage et l'opération de récupération.

9. Système d'alimentation en eau chaude (1) selon l'une quelconque des revendications 1 à 8, dans lequel le circuit de commande (9, 16) est configuré pour faire fonctionner la pompe à eau (14) à une vitesse de rotation minimale lorsque l'opération de récupération est terminée et que l'opération d'accumulation de chaleur est redémarrée.
